# EUROPEAN PATENT APPLICATION

(11) **EP 1 746 849 A2**
(43) Date of publication of application: **24.01.2007**
(21) Application number: 06019175.6
(22) Date of filing: 30.11.1999
(51) Int. Cl.: H04Q 7/22, H04Q 7/38, H04B 7/26

(54) **Method for realizing a service in a mobile communication system**

(30) Priority: 02.12.1998 KR 19980052599
(62) Divisional of application: 99123760.3
(71) Applicant: LG Electronics Inc., Youngdungpo-Gu Seoul (KR)
(72) Inventor: Hwang, In Tae, Yongin-shi, Kyonggi-do (KR); Shin, Sang Rim, Anyang-shi, Kyonggi-do (KR); Ok, Myoung Jin, Seoul (KR)
(74) Representative: Samson & Partner

(57) **Abstract**

The invention provides a method of realizing a service in a mobile communication system, comprising: providing, in a mobile station, an idle state (12) in which the service is not activated; going from the idle state (12) to a monitor state (13) in which control frames (2) of a common downlink channel are monitored, when a service identifier is allocated in the control frames (2) from a network; and going from the monitor state (13) to an active state (14) in which data frames (4) of the common downlink channel are monitored or to a saving state (15) in which the control and the data frames (2, 4) are not monitored.

## Description

### BACKGROUND OF THE INVENTION

### Field of the Invention

The present invention relates to a mobile communication system. More particularly, it relates to a method for realizing multicast service in a mobile communication system.

### Description of the Prior Art

A multicast service is a unidirectional Point-to-Multipoint service which transmits a message to all subscribers presently positioned in a geographical area defined by a service requester in a single source entity.

The message includes a group identifier which indicates whether the message is an interesting message for a specific subscriber included in a specific multicast group, or the message is an interesting message for all subscribers.

For example, the multicast service may include news information, weather information, stock information, and traffic reports, as well as a production or service advertisement.

Conventionally, a short message service is simultaneously provided to a plurality of users by using a paging channel.

However, since the conventional mobile communication system simultaneously provides a short message service to a plurality of users through a paging channel, the user cannot select various multicast services.

### SUMMARY OF THE INVENTION

According to an aspect of the present invention, a method of realizing a service in a mobile communication system, comprises the steps of: providing, in a mobile station, an idle state in which the service is not activated; going from the idle state to a monitor state in which control frames of a common downlink channel are monitored, when a service identifier is allocated in the control frames from a network; and going from the monitor state to an active state in which data frames of the common downlink channel are monitored or to a saving state in which the control and the data frames are not monitored.

Further aspects of the invention are set forth in the dependent claims, the following description of embodiments and the drawings showing embodiments.

In some embodiments, the common channel is a downlink shared channel (DSCH).

In some embodiments, the downlink shared channel (DSCH) is divided into a control frame area and a data frame area.

The control frame area and the data frame area is made of a period having the same transmission block and the same transmission time interval.

The period is determined as 10 miliseconds(ms).

The downlink shared channel (DSCH) is an additional downlink shared channel (DSCH) comprised of a control frame area and a data frame area.

According to another aspect of the present invention, a method for realizing multicast service in a mobile communication system includes the steps of:
monitoring at a mobile station a control frame area of a downlink shared channel (DSCH) down-linked from a multicast server;
detecting a multicast service identifier in the control frame area;
performing a switching operation to a downlink shared channel (DSCH) having a multicast data, if the multicast service identifier is detected; and
receiving a multicast data in a data frame area of the downlink shared channel (DSCH) switched.

Control and data frame areas according to various multicast services are shared through one downlink shared channel (DSCH), and either the control frame area or data frame area is loaded on one downlink shared channel (DSCH) and then transmitted. As a result, various multicast services are simultaneously provided to a plurality of users.

Additional features and advantages of the invention will be set forth in the description which follows, and in part will be apparent from the description, or may be learned by practice of the invention. The objective and other advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

Further objects and other advantages of the present invention will become apparent from the following description in conjunction with the attached drawings, in which:
FIG. 1 illustrates a structure of a downlink shared channel (DSCH) control/data frame in a method for realizing multicast service in a mobile communication system, according to a preferred embodiment of the present invention;
FIG. 2 illustrates another embodiment of FIG. 1;
FIG. 3 illustrates a processing step between a downlink shared channel (DSCH) and a multicast service; and
FIG. 4 illustrates a multicast state diagram related to a downlink shared channel (DSCH).

### DETAILED DESCRIPTION OF THE PREFERRED EMBODIMENT

A preferred embodiment of the present invention will now be described in detail with reference to the accompanying drawings.

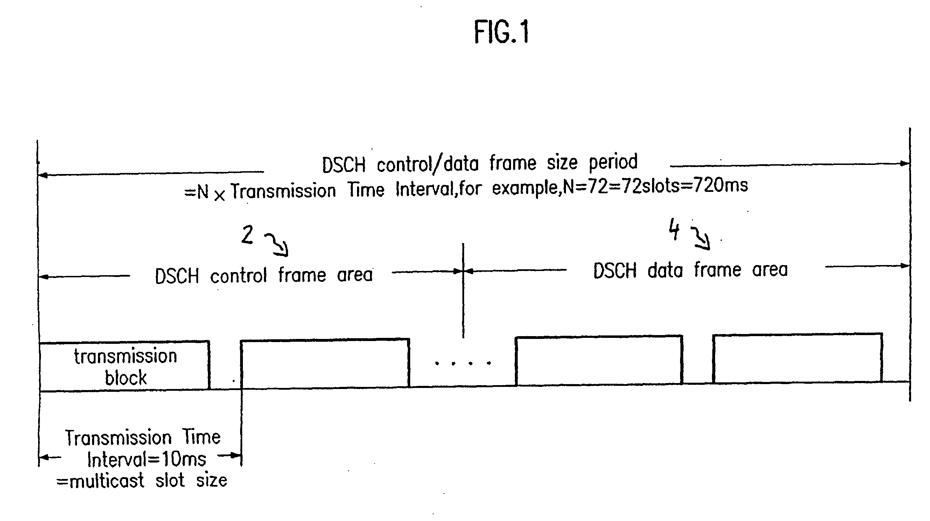

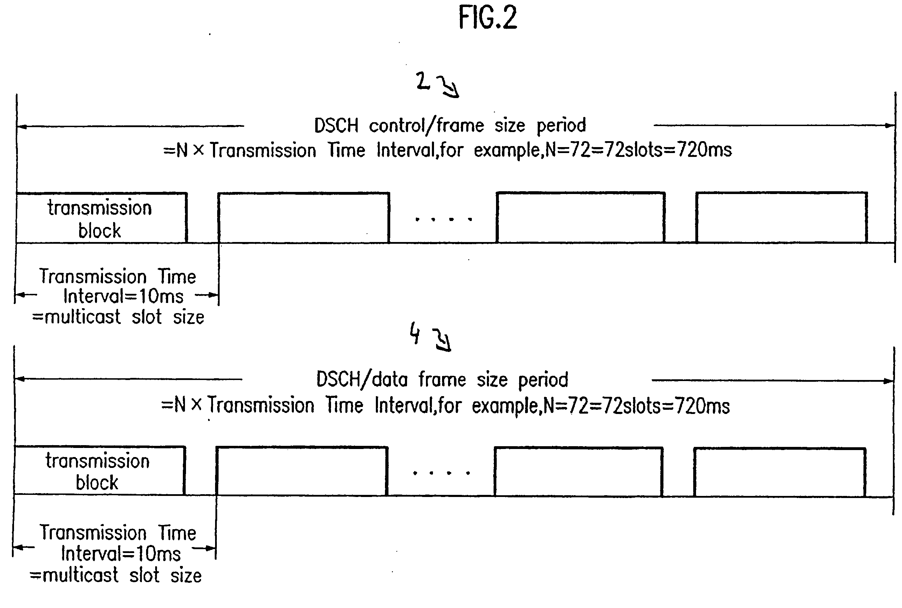

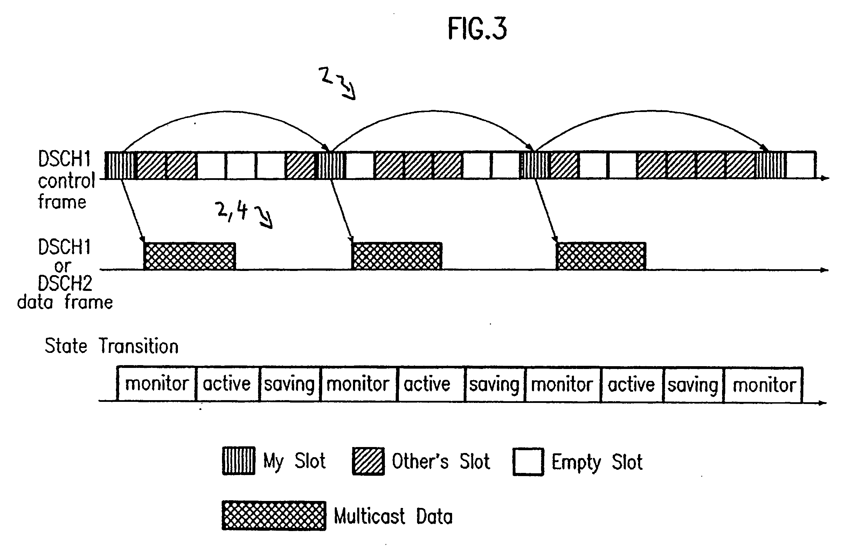

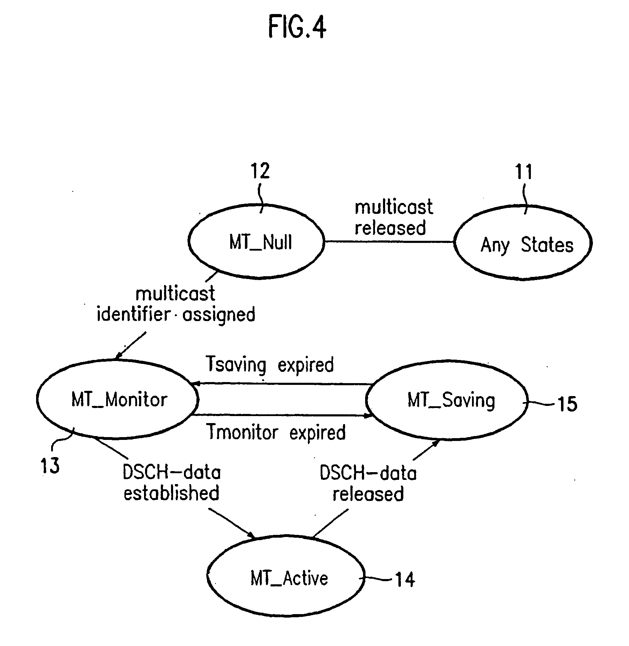

FIG. 1 illustrates a structure of a downlink shared channel (DSCH) control/data frame in a method for realizing multicast service in a mobile communication system, according to a preferred embodiment of the present invention; FIG. 2 illustrates another embodiment of FIG. 1; FIG. 3 illustrates a processing step between a downlink shared channel (DSCH) and a multicast service; and FIG. 4 illustrates a multicast state diagram related to a downlink shared channel (DSCH).

A multicast service is a unidirectional Point-to-Multipoint service which transmits a message to all subscribers presently positioned in a geographical area defined by a service requester in a single source entity.

The message includes a group identifier which indicates whether the message is an interesting message for a specific subscriber included in a specific multicast group, or the message is an interesting message for all subscribers.

For example, the multicast service may include news information, weather information, stock information, and traffic reports, as well as a production or service advertisement.

The multicast service has some requirements such as unidirectional channels and a strong error correction mechanism, because a design considering both encryption/reverse-encryption and ARQ(i.e., automatic repeat request) for the user group is dissatisfied in the multicast service.

For example, each mobile station transmits a multicast request message to a multicast server placed on a predetermined position of a core multicast server.

Also, each mobile station transmits a user identifier, service identifier, and some other parameters to the multicast server.

After that, the multicast server transmits a multicast response message having a multicast group identifier and an estimated period to each mobile station, so that each mobile station receives a multicast service.

That is, each mobile station receives a multicast service identifier when performing a random access from the multicast server, and requests various multicast services such as news information, weather information, stock information, and traffic reports, etc.

Accordingly, as shown in FIG. 1, the multicast server loads a multicast response message having both a multicast group identifier and an estimated period on a downlink shared channel (DSCH), and then transmits it.

The downlink shared channel (DSCH) exists only on a downlink, can use a beamforming, has a quickly variable rate, and can uses a slow power control. The downlink shared channel (DSCH) can be combined with a dedicated channel, or can be used in a stand-alone channel. If the downlink shared channel (DSCH) is combined with the dedicated channel, it is possible to use a fast power control. Also, the downlink shared channel (DSCH) has request characteristics about inband identification of a mobile station, outband identification, or inherent addressing.

The downlink shared channel (DSCH) control/data frame size period is determined as N x (transmission time interval). For example, N = 72 = 72 slots = 720ms.

The downlink shared channel (DSCH) control/data frame period is comprised of a downlink shared channel (DSCH) control frame area and a downlink shared channel (DSCH) data frame area.

The downlink shared channel (DSCH) control frame area and the downlink shared channel (DSCH) data frame area are comprised of the same transmission blocks and the same transmission time intervals made of a slot time. The transmission time interval is 10ms, and is the same as a multicast slot size.

After the above communication mode, each mobile station monitors a multicast downlink shared channel (DSCH) control frame of downlink shared channel (DSCH) in a non-slotted mode.

The downlink shared channel (DSCH) control frame area includes a multicast service identifier such as a multicast temporary subscriber identification (MTSI) and radio network temporary identity (RNTI).

In addition, the downlink shared channel (DSCH) control frame area includes a slot time and a data frame slot time in order to perform a monitoring operation in each mobile station.

The downlink shared channel (DSCH) control frame area selectively includes a transport channel identifier of the downlink shared channel (DSCH) receiving a multicast DSCH-data frame.

If each mobile station detects a downlink shared channel (DSCH) control frame slot having a multicast identifier by searching the downlink shared channel (DSCH) transmitted from the multicast server, each mobile station switches a received frame with a downlink shared channel (DSCH) data frame which equals to a downlink shared channel or another downlink shared channel, and then receives a multicast data in a data frame area of a switched downlink shared channel (DSCH), thereby receiving various multicast services.

Also, a multicast server is divided into a downlink shared channel (DSCH) control frame size period as shown in FIG. 1, and performs a transmission to each mobile station via a downlink shared channel (DSCH). Otherwise, as shown in FIG. 2, the multicast server individually loads a downlink shared channel (DSCH) control frame area and a downlink shared channel (DSCH) data frame area on a downlink shared channel (DSCH).

As a result, by the above steps, each mobile station detects a downlink shared channel (DSCH) control frame area and a downlink shared channel (DSCH) data frame area by searching a downlink shared channel (DSCH) control frame size period.

That is, in each transmission block within a downlink shared channel (DSCH) data frame area, each mobile station detects a multicast data corresponding to a multicast service involved in each transmission block within the downlink shared channel (DSCH) control frame area, thereby providing various multicast services.

As shown in FIG. 3, in order to provide a multicast service, a multicast server loads a control signal according to a multicast service on DSCH1 control frame, and performs a transmission of the control signal.

My slot, other's slot and a plurality of empty slots are repeated in the DSCH1 control frame.

In addition, the multicast server loads a multicast data corresponding to the multicast service on DSCH1 or DSCH2 data frame, and transmits it.

The DSCH1 control frame and the DSCH1 or DSCH2 data frame have the following state variation, i.e., monitor state -> saving state -> active state.

As shown in FIG. 4, if a multicast service is released under any states 11, a mobile station goes to a mobile station idle state (MT_Null) 12.

The mobile station idle state (MT_Null) 12 means a state that the multicast service is not activated and a downlink shared channel (DSCH) is not determined. The mobile station idle state (MT_Null) 12 is on standby until a multicast service is activated.

After that, if a multicast identifier is allocated by requesting a multicast service, a mobile station goes to a monitor state (MT_monitor) 13 from the idle state (MT_Null) 12.

In the mobile station monitor state (MT_monitor) 13, the mobile station monitors a downlink shared channel (DSCH) for a downlink shared channel (DSCH) control frame, and does not monitor a downlink shared channel (DSCH) for a downlink shared channel (DSCH) data frame.

In addition, the mobile station monitor state (MT_monitor) 13 means a state that a mobile station monitors a downlink shared channel (DSCH) to determine a multicast control frame having the allocated multicast service.

Here, in the mobile station monitor state (MT_monitor) 13, although the mobile station does not reach a state for monitoring the downlink shared channel (DSCH), a mobile station starts a timer Tₘₒₙᵢₜₒᵣ for monitoring the downlink shared channel (DSCH).

In the mobile station monitor state (MT_monitor) 13, a mobile station checks the allocated multicast identifier, thereby receiving a DSCH control frame of the downlink shared channel (DSCH).

In the mobile station monitor state (MT_monitor) 13, a mobile station goes to a mobile station active state (MT_Active) 14 when the allocated multicast identifier is confirmed in a DSCH control frame. If the allocated multicast identifier is not confirmed in the DSCH control frame before an operation completion of the timer Tₘₒₙᵢₜₒᵣ, the mobile station goes to a mobile station saving state (MT_Saving) 15.

Accordingly, in the mobile station active state (MT_Active) 14, the mobile station does not monitor the downlink shared channel (DSCH) control frame, and monitors the downlink shared channel (DSCH) data frame.

Thereafter, in the mobile station active state (MT_Active), the mobile station receives a multicast data on DSCH determined for the downlink shared channel (DSCH) data frame, and then goes to a mobile station saving state (MT_Saving) 15 if the receiving operation is completed.

Accordingly, the mobile station saving state (MT_Saving) 15 means a state that the mobile station does not monitor the downlink shared channel (DSCH) data frame and the downlink shared channel (DSCH) control frame.

Namely, although the mobile station does not go to the mobile station saving state (MT_Saving) in the mobile station saving state (MT_Saving) 15, the mobile station performs a power saving until expiration of the timer T_{saving} after a timer T_{saving} to save a power starts operating.

After that, if the expiration of the timer T_{saving} is made in the mobile station saving state (MT_Saving) 15, the mobile station goes to the mobile station monitor state (MT_Monitor) 13, and repeats the above steps.

As described above, a method for realizing multicast service in a mobile communication system simultaneously provides various multicast services to the plurality of users through one common channel, in order to prevent an interference about the other party in case of a small quantity of data.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art which this invention pertains.

## Claims

1. A method of realizing a service in a mobile communication system, comprising:
providing, in a mobile station, an idle state (12) in which the service is not activated;
going from the idle state (12) to a monitor state (13) in which control frames (2) of a common downlink channel are monitored, when a service identifier is allocated in the control frames (2) from a network; and
going from the monitor state (13) to an active state (14) in which data frames (4) of the common downlink channel are monitored or to a saving state (15) in which the control and the data frames (2, 4) are not monitored.

2. The method of claim 1, wherein the transition from the monitor state (13) to the active state (14) or to the saving state (15) is determined depending upon whether the allocated service identifier is confirmed in a control frame (2).

3. The method of claim 2, wherein the transition from the monitor state (13) to the active state (14) is performed when the allocated identifier is confirmed in the control frame.

4. The method of claim 2, wherein the transition from the monitor state (13) to the saving state (15) is performed when the allocated service identifier is not confirmed in the control frames (2).

5. The method of claim 1, further comprising going from the active state (14) to the saving state (15) when a receiving operation of data frames (4) is completed.

6. The method of claim 1, further comprising going from the saving state (15) to the monitor state (13) after a timer for the saving state (15) is expired.

7. The method of claim 1, further comprising going from any state to the idle state (12) when the service is released.

8. The method of claim 1, wherein the control and data frames (2, 4) are on a same channel.

9. The method of claim 1, wherein the control and data frames (2, 4) are on different channels.

10. The method of claim 1, wherein the channel is a downlink shared channel (DSCH).

11. The method of claim 9, wherein the different channels are a first downlink shared channel (DSCH 1) and a second downlink shared channel (DSCH 2).

12. The method of claim 10, wherein the downlink shared channel (DSCH) comprises a control frame area and a data frame area.
